# EUROPEAN PATENT SPECIFICATION

(11) **EP 3 047 362 B1**
(45) Date of publication and mention of the grant of the patent: **17.04.2019**
(21) Application number: 14766077.3
(22) Date of filing: 29.08.2014
(51) Int. Cl.: G06F 3/0488, G11B 27/031, G06F 3/048

(54) **GESTURE BASED IMAGE STYLES EDITING ON A TOUCHSCREEN .**
EDITIEREN VON BILDERSTIL MITTELS GESTE AUF EINEM BERÜHRUNGSBILDSCHIRM .
EDITION DES STYLES D' UNE IMAGE PAR GESTES SUR ÉCRAN TACTILE .

(30) Priority: 16.09.2013 US 201361878245 P; 27.05.2014 US 201462003281 P
(43) Date of publication of application: 27.07.2016
(73) Proprietor: Thomson Licensing, 92130 Issy-les-Moulineaux (FR)
(72) Inventor: VOSS, Neil D, Darien, Connecticut 06820 (US)
(74) Representative: Novagraaf Technologies
(86) International application number: PCT/US2014/053381
(87) International publication number: WO 2015/038356

(56) References cited:
- WO-A1-2010/095783
- US-A1- 2011 090 155
- US-A1- 2012 009 896
- US-A1- 2013 238 990
- US-A1- 2013 239 057
- US-B1- 8 436 821
- Kike Maíllo ET AL: "EVA- 3 D interactive holographic user interface - throwing gesture", , 7 September 2011 (2011-09-07), XP055166234, Retrieved from the Internet: URL:http://www.evalapelicula.com/wallpaper s/alex_1680x1050.jpg [retrieved on 2015-01-30]

## Description

### BACKGROUND OF THE INVENTION

Portable electronic devices are becoming more ubiquitous. These devices, such as mobile phones, music players, cameras, tablets and the like often contain a combination of devices, thus rendering carrying multiple objects redundant. For example, current touch screen mobile phones, such as the Apple iPhone or Samsung Galaxy android phone contain video and still cameras, global positioning navigation system, internet browser, text and telephone, video and music player, and more. These devices are often enabled on multiple networks, such as WiFi, wired, and cellular, such as 3G, to transmit and received data.

The quality of secondary features in portable electronics has been constantly improving. For example, early "camera phones" consisted of low resolution sensors with fixed focal length lenses and no flash. Today, many mobile phones include full high definition video capabilities, editing and filtering tools, as well as high definition displays. With this improved capabilities, many users are using these devices as their primary photography devices. Hence, there is a demand for even more improved performance and professional grade embedded photography tools. Additionally, users wish to share their content with others in more ways than just printed photographs and do so easily. Users may upload content to a video storage site or a social media site, such as YouTube. However, users may wish to edit these photos or videos before sharing and this editing ideally could be done on the mobile device. Users may wish to edit the length of a video, change color filters, brightness or other video effects. These features are not commonly available on mobile devices so users must first download the content to a computer to perform the editing. As this is often beyond either the skill level of the user, or requires too much time and effort to be practical, users often are dissuaded from sharing video content. These methods of sharing may include email, text, or social media websites, such as Facebook, twitter, YouTube or the like.

WO2010095783 defines moving a touch position (for instance a drag on a touch-screen) with a first command depending on the distance change and a second command different from the first command and depending on the rotation angle.

US2013239057defines a combination of edit effects on a whole image using a plurality of sliders , each slider being associated with an image property and movably positioned on a slider track.

It would be desirable for a user to be able to easily edit a video on a mobile device and share the media.

### SUMMARY OF THE INVENTION

A method and apparatus for editing images or video, changing attributes of an image or video, and adding effects to an image or video.

The invention is as defined in the appended claims.

### BRIEF DESCRIPTION OF THE DRAWINGS

These and other aspects, features and advantages of the present disclosure will be described or become apparent from the following detailed description of the preferred embodiments, which is to be read in connection with the accompanying drawings.

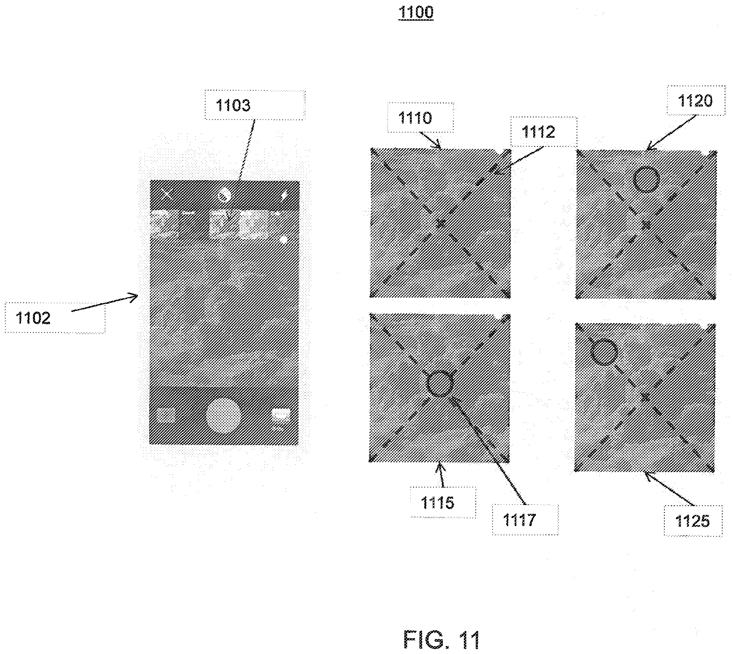

The invention is defined in the embodiments corresponding to figure 11. All other embodiments are examples or background information useful to understand the invention.

In the drawings, wherein like reference numerals denote similar elements throughout the views:
FIG. 1 shows a block diagram of an exemplary embodiment of mobile electronic device;
FIG. 2 shows an exemplary mobile device display having an active display;
FIG. 3 shows an exemplary process for image stabilization and reframing;
FIG. 4 shows an exemplary mobile device display having a capture initialization
FIG. 5 shows an exemplary process for initiating an image or video capture;
FIG. 6 shows an exemplary embodiment of automatic video segmentation.
FIG. 7 shows a method of segmenting a video.
FIG 8 shows a light box application;
FIG. 9 shows various exemplary operations that can be performed within the light box application.
FIG. 10 shows an exemplary effects control application;
FIG. 11 shows another effects control application according to the present invention.
FIG. 12 shows a method of implementing a video style according to the present invention.

### DETAILED DESCRIPTION OF THE PREFERRED EMBODIMENT

The exemplifications set out herein illustrate preferred embodiments of the invention, and such exemplifications are not to be construed as limiting the scope of the invention in any manner.

The user interface for video style editing is a system where video or image filters, styles or effects can be quickly edited on a touch screen device or the like. Video or image filters, styles or effects may include sepia toning, interlacing, blending, noise, Gaussian blur, sharpening, ripple, puzzle, distort, etc. Many filters, styles and effects exist and most can be implemented using this system.

In one exemplary embodiment, an image or video is displayed on a touch sensitive screen, such as a mobile phone screen. When the interface is enabled in response to a user input, the display is divided into quadrants, which each quadrant controlling a different effect. For example, four looks may be applied in the quadrants, such as four different styles associated with a theme, such as vintage, with 70's effect, sepia, Poloroid, etc. Other examples of themes may be color, edge contrast, etc. Touching a touch screen in the middle of the quadrants may apply a combined filter according to the theme, or may apply no effect. Moving a finger out from a center point on the screen increases the intensity of the effect assigned to that quadrant, such sepia. Moving between quadrants merges the effects.

Normalized value can be applied weighted on the diagonal. Effects can change after certain thresholds, such as .5, introduces change in color, .9 introduces new effect, etc. The magnitude of any given user vector determines the intensity of a layered series of individual images processes, which by design create a coherent predetermined look.

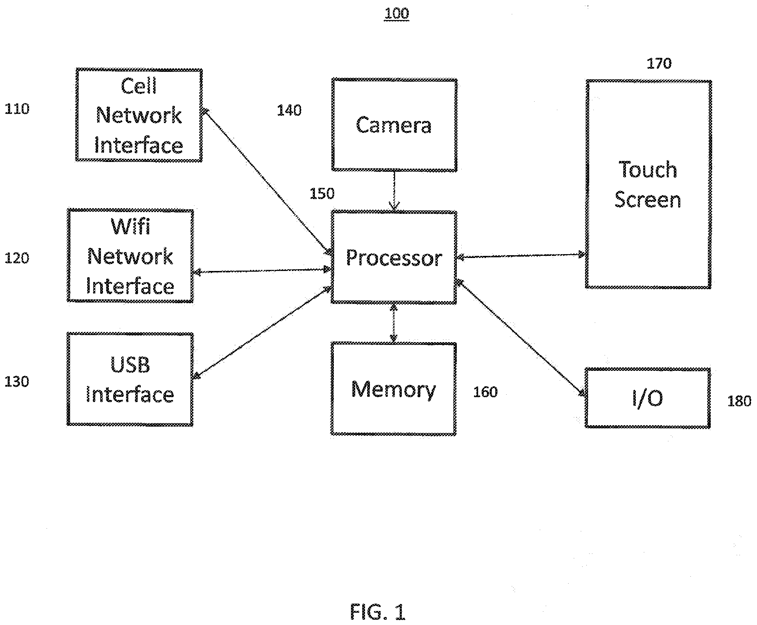

Referring to FIG. 1, a block diagram of an exemplary embodiment of mobile electronic device is shown. While the depicted mobile electronic device is a mobile phone 100, the invention may equally be implemented on any number of devices, such as music players, cameras, tablets, global positioning navigation systems etc. A mobile phone typically includes the ability to send and receive phone calls and text messages, interface with the Internet either through the cellular network or a local wireless network, take pictures and videos, play back audio and video content, and run applications such as word processing, programs, or video games. Many mobile phones include GPS and also include a touch screen panel as part of the user interface.

The mobile phone includes a main processor 150 that is coupled to each of the other major components. The main processor, or processors, routes the information between the various components, such as the network interfaces, camera 140, touch screen 170, and other input/output I/O interfaces 180. The main processor 150 also processes audio and video content for play back either directly on the device or on an external device through the audio/video interface. The main processor 150 is operative to control the various sub devices, such as the camera 140, touch screen 170, and the USB interface 130. The main processor 150 is further operative to execute subroutines in the mobile phone used to manipulate data similar to a computer. For example, the main processor may be used to manipulate image files after a photo has been taken by the camera function 140. These manipulations may include cropping, compression, color and brightness adjustment, and the like.

The cell network interface 110 is controlled by the main processor 150 and is used to receive and transmit information over a cellular wireless network. This information may be encoded in various formats, such as time division multiple access (TDMA), code division multiple access (CDMA) or Orthogonal frequency-division multiplexing (OFDM). Information is transmitted and received from the device trough a cell network interface 110. The interface may consist of multiple antennas encoders, demodulators and the like used to encode and decode information into the appropriate formats for transmission. The cell network interface 110 may be used to facilitate voice or text transmissions, or transmit and receive information from the internet. This information may include video, audio, and or images.

The wireless network interface 120, or wifi network interface, is used to transmit and receive information over a wifi network. This information can be encoded in various formats according to different wifi standards, such as 802.11g, 802.11b, 802.11ac and the like. The interface may consist of multiple antennas encoders, demodulators and the like used to encode and decode information into the appropriate formats for transmission and decode information for demodulation. The wifi network interface 120 may be used to facilitate voice or text transmissions, or transmit and receive information from the internet. This information may include video, audio, and or images.

The universal serial bus (USB) interface 130 is used to transmit and receive information over a wired like, typically to a computer or other USB enabled device. The USB interface 120 can be used to transmit and receive information, connect to the internet, transmit and receive voice and text calls. Additionally, this wired link may be used to connect the USB enabled device to another network using the mobile devices cell network interace 110 or the wifi network interface 120. The USB interface 120 can be used by the main processor 150 to send and receive configuration information to a computer.

A memory 160, or storage device, may be coupled to the main processor 150. The memory 160 may be used for storing specific information related to operation of the mobile device and needed by the main processor 150. The memory 160 may be used for storing audio, video, photos, or other data stored and retrieved by a user.

The input output (I/O) interface 180, includes buttons, a speaker/microphone for use with phone calls, audio recording and playback, or voice activation control. The mobile device may include a touch screen 170 coupled to the main processor 150 through a touch screen controller. The touch screen 170 may be either a single touch or multi touch screen using one or more of a capacitive and resistive touch sensor. The smartphone may also include additional user controls such as but not limited to an on/off button, an activation button, volume controls, ringer controls, and a multi-button keypad or keyboard

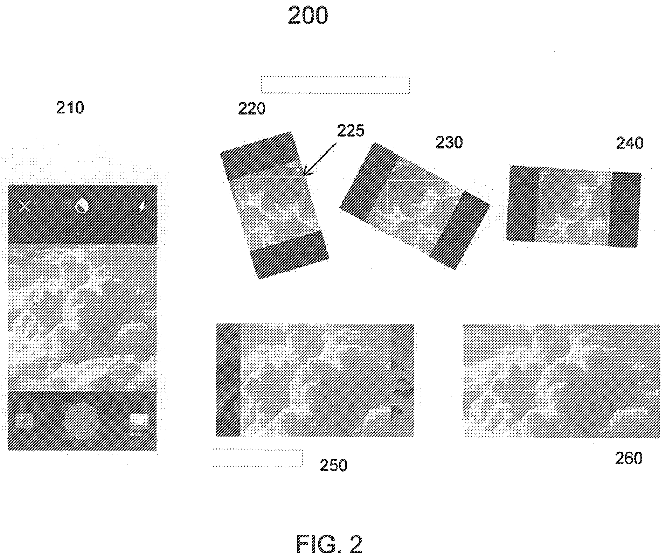

Turning now to FIG. 2 an exemplary mobile device display having an active display 200 is shown. The exemplary mobile device application is operative for allowing a user to record in any framing and freely rotate their device while shooting, visualizing the final output in an overlay on the device's viewfinder during shooting and ultimately correcting for their orientation in the final output.

According to the exemplary embodiment, when a user begins shooting their current orientation is taken into account and the vector of gravity based on the device's sensors is used to register a horizon. For each possible orientation, such as portrait 210, where the device's screen and related optical sensor is taller than wide, or landscape 250, where the device's screen and related optical sensor is wider than tall, an optimal target aspect ratio is chosen. An inset rectangle 225 is inscribed within the overall sensor that is best-fit to the maximum boundaries of the sensor given the desired optimal aspect ratio for the given (current) orientation. The boundaries of the sensor are slightly padded in order to provide 'breathing room' for correction. This inset rectangle 225 is transformed to compensate for rotation 220, 230, 240 by essentially rotating in the inverse of the device's own rotation, which is sampled from the device's integrated gyroscope. The transformed inner rectangle 225 is inscribed optimally inside the maximum available bounds of the overall sensor minus the padding. Depending on the device's current most orientation, the dimensions of the transformed inner rectangle 225 are adjusted to interpolate between the two optimal aspect ratios, relative to the amount of rotation.

For example, if the optimal aspect ratio selected for portrait orientation was square (1:1) and the optimal aspect ratio selected for landscape orientation was wide (16:9), the inscribed rectangle would interpolate optimally between 1:1 and 16:9 as it is rotated from one orientation to another. The inscribed rectangle is sampled and then transformed to fit an optimal output dimension. For example, if the optimal output dimension is 4:3 and the sampled rectangle is 1:1, the sampled rectangle would either be aspect filled (fully filling the 1:1 area optically, cropping data as necessary) or aspect fit (fully fitting inside the 1:1 area optically, blacking out any unused area with 'letter boxing' or 'pillar boxing'. In the end the result is a fixed aspect asset where the content framing adjusts based on the dynamically provided aspect ratio during correction. So for example a 16:9 video comprised of 1:1 to 16:9 content would oscillate between being optically filled 260 (during 16:9 portions) and fit with pillar boxing 250 (during 1:1 portions).

Additional refinements whereby the total aggregate of all movement is considered and weighed into the selection of optimal output aspect ratio are in place. For example, if a user records a video that is 'mostly landscape' with a minority of portrait content, the output format will be a landscape aspect ratio (pillar boxing the portrait segments). If a user records a video that is mostly portrait the opposite applies (the video will be portrait and fill the output optically, cropping any landscape content that falls outside the bounds of the output rectangle).

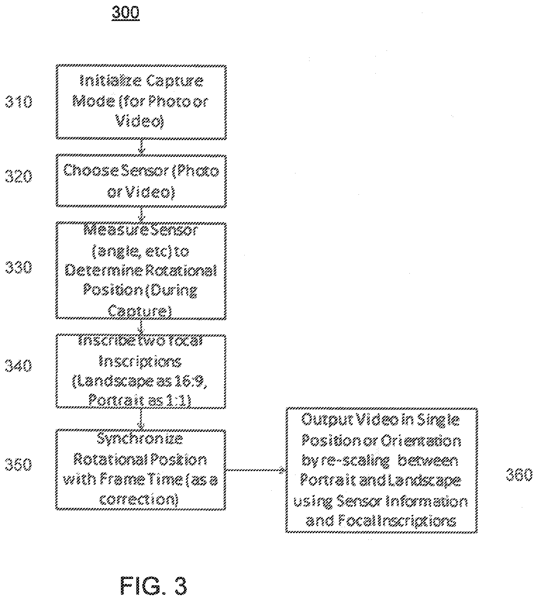

Referring now to FIG. 3, an exemplary process for image stabilization and reframing 300 in accordance with the present disclosure is shown. The system is initialized in response to the capture mode of the camera being initiated. This initialization may be initiated according to a hardware or software button, or in response to another control signal generated in response to a user action. Once the capture mode of the device is initiated, the mobile device sensor 320 is chosen in response to user selections. User selections may be made through a setting on the touch screen device, through a menu system, or in response to how the button is actuated. For example, a button that is pushed once may select a photo sensor, while a button that is held down continuously may indicate a video sensor. Additionally, holding a button for a predetermined time, such as 3 seconds, may indicate that a video has been selected and video recording on the mobile device will continue until the button is actuated a second time.

Once the appropriate capture sensor is selected, the system then requests a measurement from a rotational sensor 320. The rotational sensor may be a gyroscope, accelerometer, axis orientation sensor, light sensor or the like, which is used to determine a horizontal and/or vertical indication of the position of the mobile device. The measurement sensor may send periodic measurements to the controlling processor thereby continuously indicating the vertical and/or horizontal orientation of the mobile device. Thus, as the device is rotated, the controlling processor can continuously update the display and save the video or image in a way which has a continuous consistent horizon.

After the rotational sensor has returned an indication of the vertical and/or horizontal orientation of the mobile device, the mobile device depicts an inset rectangle on the display indicating the captured orientation of the video or image 340. As the mobile device is rotated, the system processor continuously synchronizes inset rectangle with the rotational measurement received from the rotational sensor 350. They user may optionally indicate a preferred final video or image ration, such as 1:1, 9:16, 16:9, or any ratio decided by the user. The system may also store user selections for different ratios according to orientation of the mobile device. For example, the user may indicate a 1:1 ratio for video recorded in the vertical orientation, but a 16:9 ratio for video recorded in the horizontal orientation. In this instance, the system may continuously or incrementally rescale video 360 as the mobile device is rotated. Thus a video may start out with a 1:1 orientation, but could gradually be rescaled to end in a 16:9 orientation in response to a user rotating from a vertical to horizontal orientation while filming. Optionally, a user may indicate that the beginning or ending orientation determines the final ratio of the video.

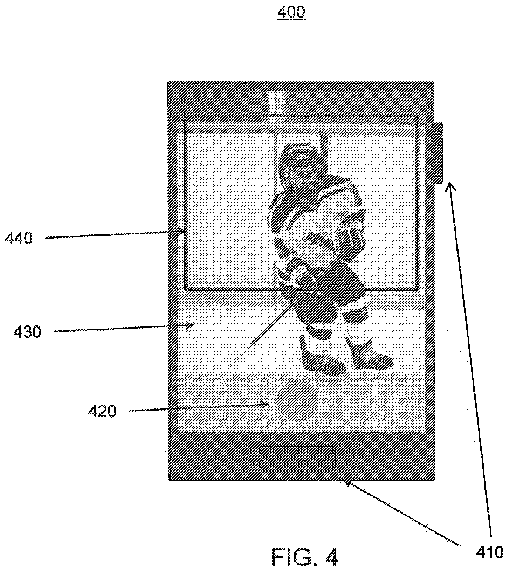

Turning now to FIG. 4, an exemplary mobile device display having a capture initialization 400 is shown. An exemplary mobile device is show depicting a touch tone display for capturing images or video. According to an aspect of the present invention, the capture mode of the exemplary device may be initiated in response to a number of actions. Any of hardware buttons 410 of the mobile device may be depressed to initiate the capture sequence. Alternatively, a software button 420 may be activated through the touch screen to initiate the capture sequence. The software button 420 may be overlaid on the image 430 displayed on the touch screen. The image 430 acts as a viewfinder indicating the current image being captured by the image sensor. An inscribed rectangle 440 as described previous may also be overlaid on the image to indicate an aspect ratio of the image or video be captured.

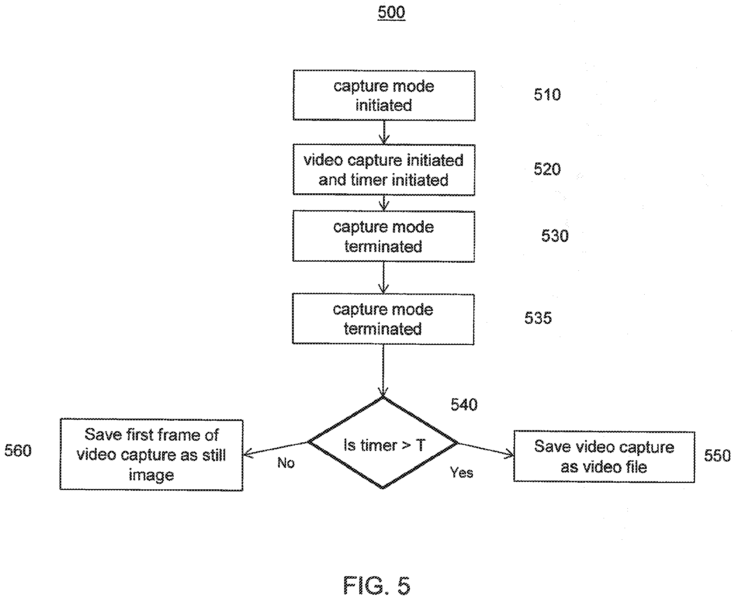

Referring now to FIG. 5, an exemplary process for initiating an image or video capture 500 in accordance with the present disclosure is shown. Once the imaging software has been initiated, the system waits for an indication to initiate image capture. Once the image capture indication has been received by the main processor 510, the device begins to save the data sent from the image sensor 520. In addition, the system initiates a timer. The system then continues to capture data from the image sensor as video data. In response to a second indication from the capture indication, indicating that capture has been ceased 530, the system stops saving data from the image sensor and stops the timer.

The system then compares the timer value to a predetermined time threshold 540. The predetermined time threshold may be a default value determined by the software provider, such as 1 second for example, or it may be a configurable setting determined by a user. If the timer value is less than the predetermined threshold 540, the system determines that a still image was desired and saves the first frame of the video capture as a still image in a still image format, such as jpeg or the like 560. The system may optionally chose another frame as the still image. If the timer value is greater than the predetermined threshold 540, the system determines that a video capture was desired. The system then saves the capture data as a video file in a video file format, such as mpeg or the like 550. The system then may then return to the initialization mode, waiting for the capture mode to be initiated again. If the mobile device is equipped with different sensors for still image capture and video capture, the system may optionally save a still image from the still image sensor and start saving capture data from the video image sensor. When the timer value is compared to the predetermined time threshold, the desired data is saved, while the unwanted data is not saved. For example, if the timer value exceeds the threshold time value, the video data is saved and the image data is discarded.

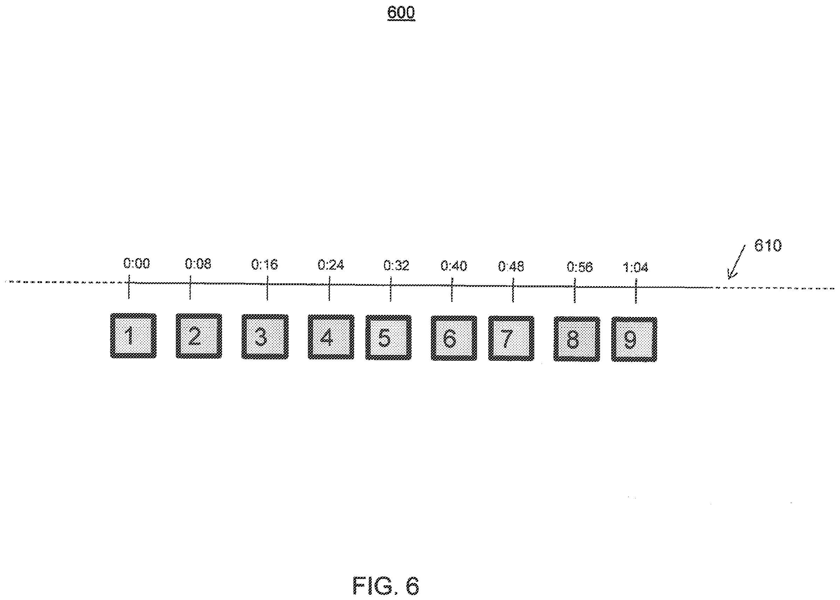

Turning now to FIG. 6, an exemplary embodiment of automatic video segmentation 600 is shown. The system is directed towards automatic video segmentation that aims to compute and output video that is sliced into segments that are as close to a predetermined time interval in seconds as possible. Additionally the segments may be longer or shorter dependant in response to attributes of the video being segmented. For example, it is not desirable to bisect content in an awkward way, such as in the middle of a spoken word. A timeline 610 is shown, depicting a video segmented into nine segments (1-9). Each of the segments is approximately 8 seconds long. The original video has a length of at least 1 minute and 4 seconds.

In this exemplary embodiment, the time interval chosen for each video segment is 8 seconds. This initial time interval may be longer or shorter, or may be optionally configurable by the user. An 8 second base timing interval was chosen as it currently represents a manageable data segment having a reasonable data transmission size for downloading over various network types. An approximately 8 second clip would have a reasonable average duration to expect an end user to peruse a single clip of video content delivered in an exploratory manner on a mobile platform. A clip of approximately 8 seconds may be a perceptually memorable duration of time where an end user can theoretically retain a better visual memory of more of the content it displays. Additionally, 8 seconds is an even phrase length of 8 beats at 120 beats per minute, the most common tempo of modern Western music. This is approximately the duration of a short phrase of 4 bars (16 beats) which is the most common phrase length (duration of time to encapsulate an entire musical theme or section). This tempo is perceptually linked to an average active heart rate, suggesting action and activity and reinforcing alertness. Furthermore, having a small, known size clip facilitates easier bandwidth calculations based upon given that video compression rates and bandwidth are generally computed around base-8 numbers, such as megabits per second, where 8 megabits = 1 megabyte, therefore each segment of video would be around 1 megabyte when encoded at 1 megabits per second.

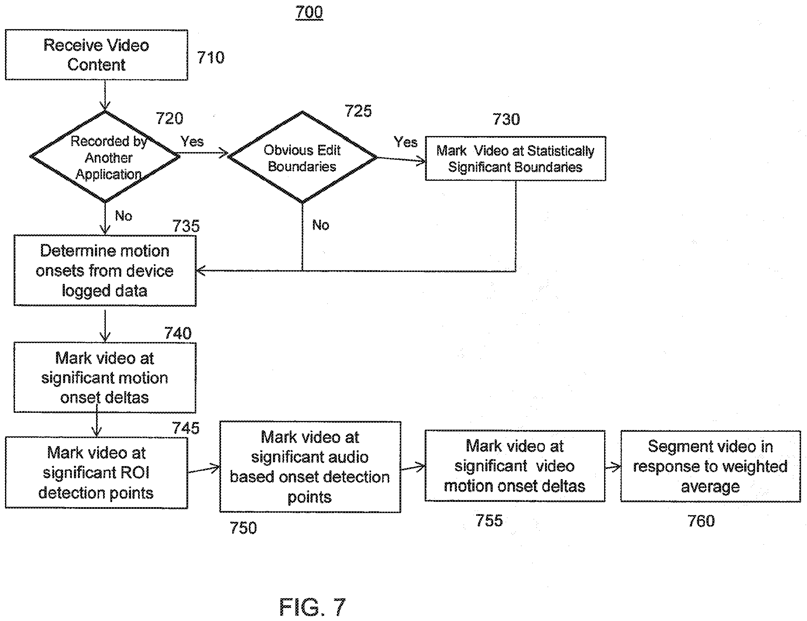

Turning now to FIG. 7, a method of segmenting a video 700 in accordance with the present invention is shown. In order to procedurally fragment video content into ideal segments of 8 seconds on perceptually good edit boundaries, a number of approaches to analyzing the video content may be applied within the system. First, an initial determination may made regarding the nature of the video content as to whether it originated from another application or was recorded using the current mobile device 720. If the content originated from another source or application, the video content is analyzed first for obvious edit boundaries using scene break detection 725. Any statistically significant boundaries may be marked, with emphasis on the boundaries on or nearest to the desired 8 second interval 730. If the video content was recorded using the current mobile device, the sensor data may be logged while recording 735. This may include the delta of movement of the device on all axes from the device's accelerometer and/or the rotation of the device on all axes based on the device's gyroscope. This logged data may be analyzed to find motion onsets, deltas that are statistically significant relative to the mean magnitude over time for any given vector. These deltas are logged with emphasis on the boundaries nearest to the desired 8 second interval 740.

The video content can be further perceptually analyzed for additional cues that can inform edit selection. If the device hardware, firmware or OS provides any integrated region of interest (ROI) detection, including face ROI selection, it is utilized to mark any ROIs in the scene 745. The onset appearance or disappearance of these ROIs (i.e. the moments nearest when they appear in frame and disappear from frame) can be logged with emphasis on the boundaries nearest to the desired 8 second interval.

Audio-based onset detection upon overall amplitude will look for statistically significant changes (increases or decreases) in amplitude relative to either the zero crossing, a noise floor or a running average power level 750. Statistically significant changes will be logged with emphasis on those nearest to the desired 8 second interval. Audio-based onset detection upon amplitude within spectral band ranges will rely on converting the audio signal using a FFT algorithm into a number of overlapping FFT bins. Once converted, each bin may be be discreetly analyzed for statistically significant changes in amplitude relative to its own running average. All bins are in turn averaged together and the most statistically significant results across all bands are logged as onsets, with emphasis on those nearest to the desired 8 second interval. Within this method the audio can be pre-processed with comb filters to selectively emphasize/deemphasize bands, for example, the bands in the range of normal human speech can be emphasized whereas high frequency bands synonymous with noise can be deemphasized.

Visual analysis of the average motion within content can be determined for a video content to help establish an appropriate segmentation point 755. At a limited frame resolution and sampling rate as required for real time performance characteristics, the magnitude of the average motion in-frame can be determined and used to look for statistically significant changes over time, logging results with emphasis on those nearest to the desired 8 second interval. Additionally, the average color and luminance of the content can be determined using a simple, low resolution analysis of the recorded data, logging statistically significant changes with emphasis on those nearest to the desired 8 second interval.

Once any or all of the above analysis is completed, the final logged output may be analyzed weighting each result into an overall average 760. This post-processing pass of the analysis data finds the most viable points in time based on the weighted and averaged outcome of all individual analysis processes. The final, strongest average points on or nearest the desired 8 second interval are computed as output that forms the model for fragmentation edit decisions.

The post processing step 760 may consider any or all of the previously mentioned marked points on the video as indicators of preferred segmentation points. The different determination factors can be weighted. Also, determination points that vary too far from the preferred segment length, such as 8 seconds, may be weighted lower than those closest to the preferred segment length.

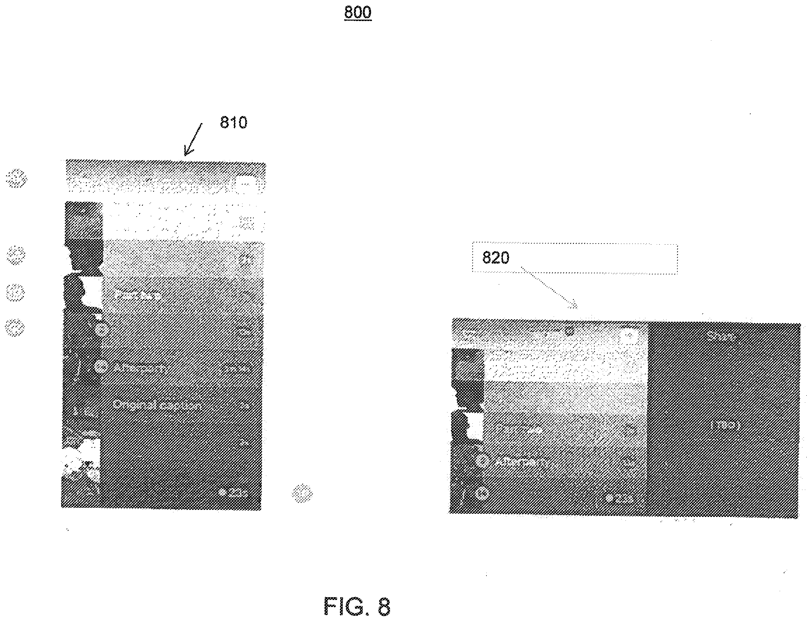

Turning now to FIG. 8, a light box application 800 is shown. The light box application is directed towards a method and system for using a list-driven selection process to improve video and media time-based editing. The light box application is shown in both the vertical 810 and the horizontal orientation 820. The light box application may be initiated after a segmented video has been saved. Alternatively, the light box application may be initiated in response to a user command. Each of the segments is initially listed chronologically with a preview generated for each. The preview may be a single image taken from the video segment or a portion of the video segment. Additional media content or data can be added to the light box application. For example, photos or videos received from other sources may be included in the light box list to permit a user to share or edit the received content or combine these received contents with newly generated content. Thus, the application permits video and media time-based editing into a simple list driven selection process.

The light box application may be used as a center point for sharing editorial decisions. The light box allows users to quickly and easily view content and decide what to keep, what to discard, and how and when to share with others. The light box function may work with the camera, with channel browsing or as a point to import media from other places. The light box view may contain a list of recent media or grouped sets of media. Each item, image or video, is displayed as at thumbnail, with a caption, aduration, and a possible group count. The caption may be generated automatically or by the user. The duration may be simplified, so as to present to the user the weight and pace of the media content. The light box title bar may include the category of the light box set with its item count, along with navigation to go back, import an item, or open a menu.

The light box landscape view 820 offers a different layout, with media items listed on one side and optionally, a method of sharing in some immediately assessable form on the other side. This may include links or previews of facebook, twitter, or other social media applications.

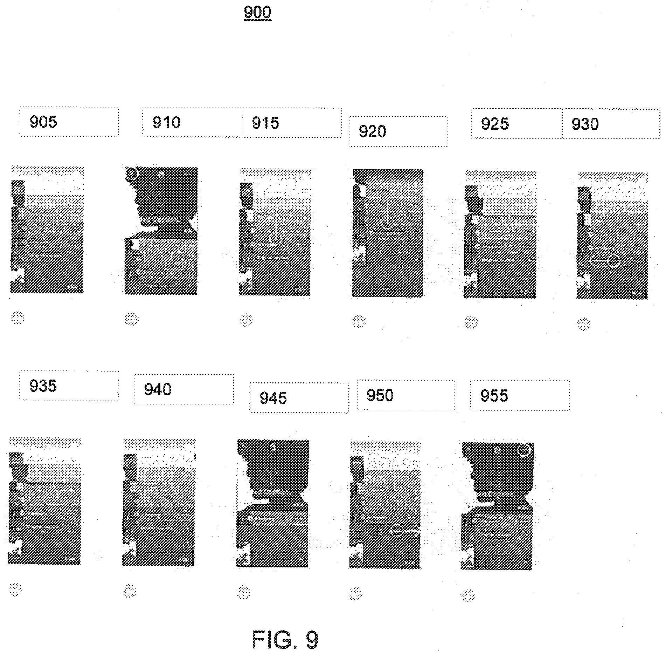

Turning now to FIG. 9, various exemplary operations 900 that can performed within the light box application are shown. Media that is captured by an integrated camera feature, for example, imported from the device's existing media library, possibly recorded with or created by other applications or downloaded from web based sources, or curated from content published directly within the related application are all collected into the light box in a preview mode 905. The light box presents media in a simple vertical list, categorized into groups based on events, such as groupings of time, within which the media was collected. Each item is represented by a list row including a thumbnail or simplified duration for the given piece of media. By tapping on any item the media can be previewed in an expanded panel that displays in direct relation to the item.

The light box application may optionally have an expanded items view 910, which previews the item. The expanded items view 910 exposes options to processing the media item, captioning, and sharing it. Tapping the close button closes the item or tapping another item below it closes the item and opens another.

Scrolling up or down within the light box application permits the user to navigate the media items 915. The header may remain at the top of the list, or it may float atop the content. Scrolling to the end of a list may enable navigation to other, older lists 920. The headings of the older lists may be revealed under tension while dragging. Dragging past tension transitions to the older lists. Holding and dragging on an item allows the user to reorder items or combine items by dragging one onto another 925. Swiping an item to the left removes the item from the light box 930. Removing items may or may not remove them from the device, or may just remove the item from the light box application. Dragging and dropping items onto other items may be used to combine the items into a group 935, or combine the dragged item into a group. Pinching items together combines all items that were within the pinch range into a group 940. When previewing combined items, they play sequentially and show an item count that can be tapped to expand the combined items below the preview window 945. The regular light box items may then be pushed down to permit the expanded items to be displayed as rows.

Items can be manipulated by dragging on them from within the light box application. Items can be removed from the light box application by dragging left on any item the item for example 930. By dragging right on any item, the item can be promoted to publish immediately 950, which transitions to a screen allowing the user to share the given item's media on one or many sharing locations 955. Tapping a share button when previewing may also enable the sharing of an item. By pressing holding on any item it becomes draggable, at which point the item can be dragged up and down to re-organize its position in the overall list. Time in the list is represented vertically, top-to-bottom. For example, the top most item is first in time were the media to be performed sequentially. Any whole group of items (kept under a single event heading) can be collectively previewed (played sequentially as a single preview comprised of all items in order of time), can be collectively deleted or published using the same gestures and means of control as a single list item. When previewing any item that contains video or time-based media, playback can be controlled by dragging left-to-right on the related list item row. The current position in time is marked by a small line that can be dragged to offset time during playback by the user. When previewing any item that contains video or time-based media, by pinching with 2 fingers horizontally upon the related list item row a selection range is defined which can be pinched and dragged in order to trim the original media as the final playback output. When previewing any item that contains an image or still media, by dragging left-to-right or right-to-left on the related list item row any additional adjacent frames captured can be selectively 'scrubbed'. For example if during a single photo capture the camera records several frames of output, this gesture can allow the user to cycle through and select the best frame as the final still frame.

Items that have recently been published (uploaded to one or many publishing destinations) are automatically cleared from the light box list. Items that time out, or live in the light box for longer than a prolonged inactivity period, such as several days, are automatically cleared from the light box list. The light box media is built upon a central, ubiquitous storage location on the device so that other applications who incorporate the same light box view all share from the same current pool of media. This makes multi-application collaboration on multimedia asset editing simple and synchronous.

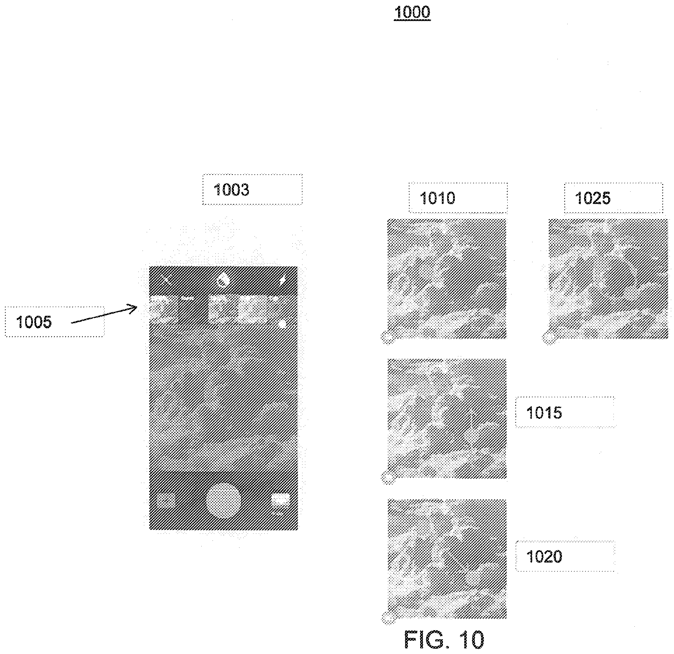

Turning now to Fig. 10, an exemplary effects control application 1000 is shown. In this particular exemplary embodiment, effect looks are controlled in real time on video or photos, with their intensity and values accessible to the user via fluid, gestural controls. This provides the user an experience that is less like editing and more like artistry while dynamically changing the look of the finished product. Effect parameters are controlled directly on-screen, atop the photo or video media view itself. No visible controls need to be presented to users. Instead, the user gestures by touching and dragging with one or multiple fingers, pinching in and out and rotating to control features of any given effect. The users get real time feedback in the form of seeing the applied results of the effect on the photo or video content immediately. No visual indicators of value, parameter or range are displayed aside possibly a small highlight of their touch positions to emphasis the gesturing is taking place.

Generally, a uniform language of effect control is applied where by touching and holding briefly in place a gesture is initiated. Feedback may be provided by placing a highlight circle at and around the user's touch position. The center point of the display (the median of both the horizontal and vertical axes) may be considered the 0,0 point, whereby no effect is applied. By dragging upwards from the center to the top of the display the value of a color look effect (for example a LUT color grade) is mixed into the source with increasing strengths. For example, at approximately 50% of the distance from the center to the top the effect is mixed at full 100%. Beyond 50%, up to 100%, the effect may be exaggerated to more extreme values.

Another aspect of the exemplary system according to the present invention may introduce parallel effects on the same effects menu, such as a boost of contrast and/or saturation. The specific complimentary boost is creatively determined on a look-by-look basis. By dragging left to right the color temperature of the effect or similar chromatic alteration may be applied. For example, left-to-right single-finger gesture movement may apply to a change in color tone. By dragging downwards from the center, a complimentary effect may be applied that from a creative look point of view is similar to or complimentary to the effect applied when dragging upwards. This could be, for example, a standard Bleach Bypass effect on the upward vector paired with a standard Cross Process effect on the downward vector. In other cases the downward drag could simply invert color or otherwise control a variation the principal, upward, effect.

Additionally, users may be able to select a secondary layer of effect from the first layer of effect. For example, by touching and holding with two fingers, a user can initiate a pinch/rotate gesture to control a secondary layer of effect that defines the output look. Pinching in and out may control the scale and intensity of an overlay-style effect layer that is composited atop the source media. For example a vignette, 'noise' or other aesthetic overlay, radial or linear blurring, bokeh, or other heavily stylized layer or post processing treatment. Dragging left to right may control the position of such overlay relative to the source, or its offset in repetition in the event that it is tile-based. Rotating, such as by rotating two fingers relative to one another around a virtual center point acts as a 'dial' that can vary the nuance of a given effect. For example with a vignette this may control the decay rate of the blurring. One desirable feature according to the present invention would be to formalize gestures for modifying the parameters of looks-based effects so that users become familiar with how to control effects while totally reliant on exploration and direct feedback in the form of output results.

Effects controls may be initiated from a video preview screen 1003 using the look effects menu 1005. The look effects menu 1005 may be initiated by tapping an effects icon. Alternatively, the look effects menu 1005 may be initiated by a gesture, such as holding a finger on the screen and then performing a gesture, such as a circle. The look effects menu 1005 may alternatively be initiated by touching the screen holding the contact for a period of time in the same location. Once the period of time is met, the look effects menu 1005 will be initiated. The look effects menu 1005 may be toggled open and closed by repeating this gesture or by repeatedly tapping the effects icon. The look effects menu 1005 could present a series of effects in a scrolling strip, where each effect is depicted as a thumbnail processing the effect on a scaled representation of the current frame. Each thumbnail may have an effect label and the currently highlighted effect being active. Tapping the current effect may toggle the effect on and off.

Pinching 1020 in and out may be used to control a selected look effect. For example, pinching in and out may control the intensity of a designed vignette or overlay styled for the effect. Depending on the intended look of the effect, this may control a darker or lighter effect, center focus or blur, chromatic aberration, or other stylized post processing. The effect intensity ranges may vary from a value of 0 for pinched close together, to 1 for pinched fully apart. The pinched fully apart condition would be met when the two pinch points exceed a certain threshold distance.

Rotating 1025 may also be used to control a selected look effect. Rotating two fingers left to right may dial the intensity of any composited overlay texture, such as noise, grain, or the like. A rightward turn may be used to increase the texture contrast and visibility and a leftward turn may decrease it. Not all effects need be paired with an obvious texture, but a general-purpose application of such may be to add subtle noise or similar.

Effects looks may be initiated and controlled on video in a gesture manner. A user may gesture on the screen to control effects on top of the primary viewfinder in real time. For example, by holding briefly on a point on screen, effect controls may be enabled 1010. A brief hold may be used to differentiate control of effects from control of focus or other base interactions. Once a controlling look is enabled 1015, dragging in all directions may control the effect using a 4-pole scheme. Effects may be arranged whereby two complimentary processes take place on opposing Y axis, for example negative one to zero controls the intensity of Bleach Bypass, whereas zero to one controls the intensity of Cross Process. At the center, or zero value, the effect is off or near off. At approx 0.5, the effect is at a full normal intensity. Between approx 0.5 and 1.0, the effect may pass through rather extreme or exaggerated intensity levels. In one exemplary embodiment, color tonality or other color contour is controlled on the X axis.

Referring now to Fig. 11, another effects control application 1100 according to the present invention is shown. In this particular embodiment, effect looks are controlled in real time on video or photos, with their intensity and values accessible to the user via gestural controls. A user interface for video style editing is a system where video or image filters, styles or effects can be combined in one user interface for easy effect control by the user. Video or image filters, styles or effects may include sepia toning, interlacing, blending, noise, Gaussian blur, sharpening, ripple, puzzle, distort, etc. Many filters, styles and effects exist and most can be implemented using this system.

An image or video is displayed on a touch sensitive screen, such as a mobile phone screen 1102. When the interface is enabled in response to a user input 1103, the display is virtually divided into quadrants, which each quadrant controlling a different effect. The user interface may be initiated by a menu selection. Once, the user interface is initiated, the user may be presented with a number of visual themes, such as 70's look, color inversion, black and white, classic film grains, etc. A number of visual looks or effects are associated with each theme. For example, with the 70's theme, looks such as damaged, Kodachrome, bokeh, and Vintage Analog may be associated with the theme. Other examples of themes may be color, edge contrast, etc.

Once a theme is initiated, four looks are applied in the quadrants of the mobile phone screen 1110. For illustrative purposes, lines 1112 have been added to the mobile phone screen 1110 to illustrate the boundaries of the quadrants. Touching a touch screen 1115 in the middle of the quadrants 1117 may apply a combined filter according to the theme, or may apply no effect. Moving a finger out from a center point on the screen 1120 increases the intensity of the effect assigned to that quadrant. Moving between quadrants merges the effects 1125 in a weighted ratio defined by the position of the user input, the distance from center and the proximity to a quadrant border. Thus, when a user gestures a finger from the centerline of the top quadrant, to the left, the system applies a combined effect with the look assigned to the upper quadrant being dominant. As the user's touch input moves over the quadrant boundary to the left, the effect assigned to the left quadrant becomes more dominant and the effect of the upper quadrant, less dominant. As the user's touch is moved towards the left, the intensity of the left quadrant effect becomes greater. As the user moves right towards the center, the intensity of the left quadrant effect becomes less. As the user's touch is moved across the center point to the right, the left quadrant effect is reduced or eliminated and the right quadrant effect becomes more intense. Thus, as the user moves a finger over the touch screen, a blend of looks can be achieved in real time as the image or video effects are applied.

An alternative embodiment has a different effect assigned to a direct on the screen. Thus, using the previous example of the 70's theme, looks such as damaged, Kodachrome, bokeh, and Vintage Analog may be each associated with a direct. As a user slides a finger up the screen, a look assigned to the up direction is intensified and a look assigned to the down direction is weakened. Likewise, when a user slides a finger to the left, a look assigned to the left direction is intensified and a look assigned to the right direction may be weakened. The user may be able to lift their finger after sliding to the right for example, move their finger to the left without touching the screen and retouch the screen and slide right again. This would have the effect of further intensifying the look assigned to the right direction. Thus instead of a quadrant or region being assigned to a look associated with a theme, a direct is associated with a look. Sliding on a diagonal may intensify two different looks. The rate at which the two looks are intensified is dependant on the angle of the touch slide user input.

The normalized value can be applied weighted as the touch indicator is moved from center to the edge of the screen. Effects can change after certain thresholds, such as .5, introduces change in color, .9 introduces new effect, etc. The magnitude of any given user vector determines the intensity of a layered series of individual images processes, which by design create a coherent predetermined look.

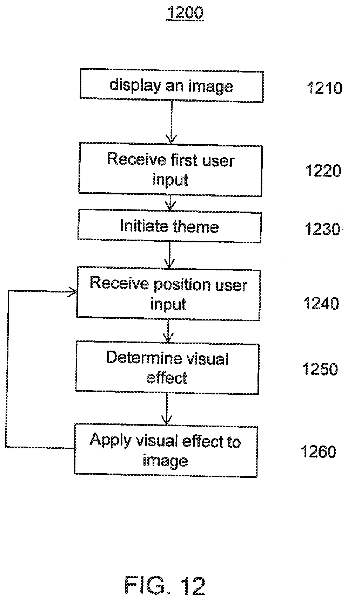

Turning now to Fig. 12 a method of implementing a video style 1200 according to the present invention is shown. The method may be performed by any device with a camera or a device capable of displaying images or video. A touch screen can be used to generate user inputs, a touchpad. a remote control device, or keypad. The method is operative to alter the look of an image or video by applying image filters.

First, the system is operative to display an image 1210 on the screen of the device. The image is displayed throughout the process such that filter effects and the like can be immediately viewed after implementation and users are given real time feedback into the look of the image.

The system is then operative to receive a first user input 1220. The user initiated the theme selection menu. The theme selection menu may be a traditional word menu, or a menu depicting the image with a sample of the theme applied Fig. 11, 1103. Once the user selects a theme, a control signal is generated to identify which theme has been selected.

Responsive to the first user input, the system initiates a theme 1230. The image is then displayed on the screen with regions of the image associated with a look associated with the theme. Boundaries may be visually shown on the image or may not. Boundary display may be a user selectable option.

The system is then operative to receive a second user input 1240. The user applies touch or pressure to a portion of the touch screen. A control signal generated indicating a position on the screen. For example, if the screen is represented as a 100 x 100 matrix, the user may have applied touch to point 40, 56 in the matrix. In this example, the point may be associated with a lower, left side quadrant when the lower left side quadrant is associated with a particular visual look.

They system determines a visual effect to apply 1250 to the image in response to the second user input. The system is operative to receive the control signal indicating the touch position. The system then determines which visual effect to apply to the image. Each position is assigned a particular filter. Thus, moving the position along the screen does not necessarily mean that the looks are altered proportionately. A look can be exponentially intensified as the position moves closer to the edge of a quadrant for example. The system applies the visual effect to the image 1260 and the image is displayed. This provides the user immediate visual feedback. The system then returns to step 1240 to await a change in the position. If a change in the position is determined, a new visual look is applied to the image. At some point, the user may initiate a command to save or transmit the image or video. In response to this command, the image or video may be saved in a memory with the visual look associated with the last received position information applied.

It should be understood that the elements shown and discussed above, may be implemented in various forms of hardware, software or combinations thereof. Preferably, these elements are implemented in a combination of hardware and software on one or more appropriately programmed general-purpose devices, which may include a processor, memory and input/output interfaces. The present description illustrates the principles of the present disclosure. It will thus be appreciated that those skilled in the art will be able to devise various arrangements that, although not explicitly described or shown herein, embody the principles of the disclosure and are included within the scope of the claims.

All examples and conditional language recited herein are intended for informational purposes to aid the reader in understanding the principles of the disclosure and the concepts contributed by the inventor to furthering the art, and are to be construed as being without limitation to such specifically recited examples and conditions. Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure. Thus, for example, it will be appreciated by those skilled in the art that the block diagrams presented herewith represent conceptual views of illustrative circuitry embodying the principles of the disclosure. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

## Claims

1. A method of altering an image in real time according to themes, whereby a number of visual effects are associated with themes, comprising the steps of:
- displaying an image (1102) on a touch screen responsive to a user input;
- initiating a theme from a menu (1103) responsive to a first user initiated selection;
- displaying an altered version of said image (1110) on said touch screen, said display showing at least two quadrants, a first visual effect of the initiated theme being assigned to the first quadrant and a second visual effect of the initiated theme being assigned to the second quadrant, wherein the first and second visual effects are different;
- receiving a first control signal (1115) corresponding to a first user initiated selection wherein said user initiated selection is made by touching the touchscreen in the middle of one of the quadrants;
- initiating a first effects control mode (1015, 1240) in response to said first control signal;
- receiving a second control signal corresponding to a gesture from the first quadrant to the second quadrant on the touch screen;
- determining a merged visual effect in response to said second control signal, wherein said merged visual effect is a weighted combination of the first image effect and the second image effect; and
- displaying an altered version of said image (1125) in response to said merged visual effect.

2. The method of claim 1 wherein said image is gradually altered simultaneously with the change in said second control signal.

3. The method of claims 1 or 2 wherein said combination of said first image effect and said second image effect are altered in response to a change in said second control signal..

4. The method of claims 1 or 3 further comprising the step of:
- defining a third quadrant of said image and a fourth quadrant of said image; assigning said third image effect to said third quadrant and said fourth image effect to said fourth quadrant;

5. The method of claim 1 wherein said display is further operative to display a boundary of said first quadrant on said image and said first image effect is applied in a nonlinear intensity in response to a distance of said position from a center of said image.

6. An apparatus comprising;
- a touch sensitive control device (100) for receiving user initiated gestures responsive to user gestural controls such that no visible controls are presented on proximity to said image on said touch screen;;
- a controller (180) for generating a plurality of control signals in response to said user initiated gestures;
- a processor (150) for initiating a variety of looks effects options from a menu (1005) responsive to user initiated selections, t.; and
- a display (180) operative to display said image, said display further operative to display said altered version of said image
- such that said apparatus is adapted to implement the method according to any one of claims 1 to 5.

7. The apparatus of claim 6 wherein said touch sensitive control device, said controller and said display are parts of a touch screen display.

## Patentansprüche

1. Verfahren zum Ändern eines Bilds in Echtzeit gemäß Themen, wobei einer Anzahl visueller Effekte Themen zugeordnet sind, wobei das Verfahren die folgenden Schritte umfasst:
- Anzeigen eines Bilds (1102) auf einem Berührungsbildschirm als Reaktion auf eine Nutzereingabe;
- Initiieren eines Themas aus einem Menü (1103) als Reaktion auf eine erste durch den Nutzer initiierte Auswahl;
- Anzeigen einer geänderten Version des Bilds (1110) auf dem Berührungsbildschirm, wobei die Anzeige mindestens zwei Quadranten zeigt, wobei dem ersten Quadranten ein erster visueller Effekt des initiierten Themas zuwiesen wird und dem zweiten Quadranten ein zweiter visueller Effekt des initiierten Themas zuwiesen wird, wobei sich der erste und der zweite visuelle Effekt unterscheiden;
- Empfangen eines ersten Steuersignals (1115), das einer ersten durch den Nutzer initiierten Auswahl entspricht, wobei die durch den Nutzer initiierte Auswahl dadurch getroffen wird, dass der Berührungsbildschirm in der Mitte eines der Quadranten berührt wird;
- Initiieren einer ersten Effektesteuerbetriebsart (1015, 1240) als Reaktion auf das erste Steuersignal;
- Empfangen eines zweiten Steuersignals, das einer Geste von dem ersten Quadranten zu dem zweiten Quadranten auf dem Berührungsbildschirm entspricht;
- Bestimmen eines vereinigten visuellen Effekts als Reaktion auf das zweite Steuersignal, wobei der vereinigte visuelle Effekt eine gewichtete Kombination des ersten Bildeffekts und des zweiten Bildeffekts ist; und
- Anzeigen einer geänderten Version des Bilds (1125) als Reaktion auf den vereinigten visuellen Effekt.

2. Verfahren nach Anspruch 1, wobei das Bild gleichzeitig mit der Änderung des zweiten Steuersignals allmählich geändert wird.

3. Verfahren nach Anspruch 1 oder 2, wobei die Kombination des ersten Bildeffekts und des zweiten Bildeffekts als Reaktion auf eine Änderung des zweiten Steuersignals geändert wird.

4. Verfahren nach Anspruch 1 oder 3, das ferner den folgenden Schritt umfasst:
- Definieren eines dritten Quadranten des Bilds und eines vierten Quadranten des Bilds;
- Zuweisen des dritten Bildeffekts zu dem dritten Quadranten und des vierten Bildeffekts zu dem vierten Quadranten.

5. Verfahren nach Anspruch 1, wobei die Anzeige ferner zum Anzeigen einer Begrenzung des ersten Quadranten in dem Bild betreibbar ist und wobei der erste Bildeffekt als Reaktion auf eine Entfernung der Position von einem Zentrum des Bilds in einer nichtlinearen Stärke angewendet wird.

6. Vorrichtung, die umfasst:
- eine berührungsempfindliche Steuervorrichtung (100) zum Empfangen durch den Nutzer initiierter Gesten als Reaktion auf Nutzergestensteuerungen, sodass in der Nähe des Bilds auf dem Berührungsbildschirm keine sichtbaren Steuerungen dargestellt werden;
- einen Controller (180) zum Erzeugen mehrerer Steuersignale als Reaktion auf die durch den Nutzer initiierten Gesten;
- einen Prozessor (150) zum Initiieren einer Vielzahl von Aussehenseffekteoptionen aus einem Menü (1005) als Reaktion auf durch den Nutzer initiierte Auswahlen; und
- eine Anzeige (180), die dafür betreibbar ist, das Bild anzuzeigen, wobei die Anzeige ferner dafür betreibbar ist, die geänderte Version des Bilds anzuzeigen;
- sodass die Vorrichtung dafür ausgelegt ist, das Verfahren nach einem der Ansprüche 1 bis 5 zu implementieren.

7. Vorrichtung nach Anspruch 6, wobei die berührungsempfindliche Steuervorrichtung, der Controller und die Anzeige Teile einer Berührungsbildschirmanzeige sind.

## Revendications

1. Procédé de modification d'une image en temps réel selon des thèmes, dans lequel certains effets visuels sont associés à des thèmes, comprenant les étapes consistant à :
- afficher une image (1102) sur un écran tactile en réponse à une entrée utilisateur ;
- initier un thème depuis un menu (1103) en réponse à une première sélection initiée par un utilisateur ;
- afficher une version modifiée de ladite image (1110) sur ledit écran tactile, ledit affichage présentant au moins deux quadrants, un premier effet visuel du thème initié étant affecté au premier quadrant et un deuxième effet visuel du thème initié étant affecté au deuxième quadrant, où les premier et deuxième effets visuels sont différents ;
- recevoir un premier signal de commande (1115) correspondant à une première sélection initiée par un utilisateur où ladite sélection initiée par un utilisateur est effectuée en touchant l'écran tactile au milieu de l'un des quadrants ;
- initier un premier mode de commande d'effets (1015, 1240) en réponse audit premier signal de commande ;
- recevoir un deuxième signal de commande correspondant à un geste du premier quadrant au deuxième quadrant sur l'écran tactile ;
- déterminer un effet visuel fusionné en réponse audit deuxième signal de commande, où ledit effet visuel fusionné est une combinaison pondérée du premier effet d'image et du deuxième effet d'image ; et
- afficher une version modifiée de ladite image (1125) en réponse audit effet visuel fusionné.

2. Procédé selon la revendication 1 dans lequel ladite image est graduellement modifiée simultanément avec la modification dans ledit deuxième signal de commande.

3. Procédé selon la revendication 1 ou 2 dans lequel ladite combinaison dudit premier effet d'image et dudit deuxième effet d'image est altérée en réponse à une modification dans ledit deuxième signal de commande.

4. Procédé selon la revendication 1 ou 3, comprenant en outre les étapes suivantes :
- définition d'un troisième quadrant de ladite image et d'un quatrième quadrant de ladite image ;
- affectation dudit troisième effet d'image audit troisième quadrant et dudit quatrième effet d'image audit quatrième quadrant ;

5. Procédé selon la revendication 1 dans lequel ledit affichage permet en outre d'afficher une limite dudit premier quadrant sur ladite image et ledit premier effet d'image est appliqué avec une intensité non linéaire en réponse à une distance de ladite position par rapport à un centre de ladite image.

6. Appareil comprenant ;
- un dispositif de commande tactile (100) pour recevoir des gestes initiés par un utilisateur en réponse à des commandes gestuelles d'un utilisateur de sorte qu'aucune commande visible ne soit présente à proximité de ladite image sur ledit écran tactile ;
- un dispositif de commande (180) pour générer une pluralité de signaux de commande en réponse auxdits gestes d'un utilisateur ;
- un processeur (150) pour initier une variété d'options d'effets d'apparence depuis un menu (1005) en réponse à des sélections initiées par un utilisateur, t. ; et
- un affichage (180) permettant d'afficher ladite image, ledit affichage permettant en outre d'afficher ladite version modifiée de ladite image
- de sorte que ledit appareil soit adapté pour mettre en oeuvre le procédé selon l'une quelconque des revendications 1 à 5.

7. Appareil selon la revendication 6 dans lequel ledit dispositif de commande tactile, ledit dispositif et ledit affichage font partie d'un affichage à écran tactile.
